# EUROPÄISCHE PATENTSCHRIFT

(11) **EP 2 213 175 B1**
(45) Veröffentlichungstag und Bekanntmachung des Hinweises auf die Patenterteilung: **22.05.2019**
(21) Anmeldenummer: 09151878.7
(22) Anmeldetag: 02.02.2009
(51) Int. Cl.: A21B 7/00, F24C 7/08

(54) **Verfahren zum Bestimmen eines künftigen Arbeitsablaufs und Gargerät**
Method for setting a future work process and cooking device
Procédé de détermination d'un futur déroulement de travail et appareil de cuisson

(43) Veröffentlichungstag der Anmeldung: 04.08.2010
(60) Teilanmeldung: 19153469.2
(73) Patentinhaber: Rational AG, 86899 Landsberg am Lech (DE)
(72) Erfinder: Breunig, Manfred, 86956 Schongau (DE); Kutz, Sebastian, 86899 Landsberg (DE); Kramer, Gerhard, 86929 Penzing/Untermühlhausen (DE); Jelitto, Alexander, 86916 Kaufering (DE); Enders, Armin, 86899 Landsberg (DE); Pechaigner, Stefan, 85221 Dachau (DE); Schulze, Paul, 86842 Türkheim (DE); Seemüller, Simon, 86825 Bad Wörishofen (DE); Guth, Wolfgang, 86932 Pürgen (DE); Schneider, Matthias, 80687 München (DE)
(74) Vertreter: Weber-Bruls, Dorothée

(56) Entgegenhaltungen:
- EP-A- 1 719 411
- DE-U1- 20 203 117

## Beschreibung

Die vorliegende Erfindung betrifft ein Verfahren zum Bestimmen eines zukünftigen Arbeitsablaufs mit einem Ablaufplan in zumindest einem Gargerät sowie ein Gargerät und ein System, umfassend eine Vielzahl von Gargeräten, ein Netzwerk und eine Anzeige- und Eingabeeinrichtung, zur Durchführung eines solchen Verfahrens.

Im Stand der Technik sind zahlreiche Verfahren zum Führen von Garprozessen bekannt. Ein Verfahren ist beispielsweise aus der EP 1 989 978 A1 bekannt. Das bekannte Verfahren ermöglicht es beispielsweise, eine morgendliche Thekenbeschickung für eine Bäckereifiliale zeit- und energieoptimiert zu gewährleisten. So können täglich verwendete Garprogramme, die jeden Tag aus tiefgefrorenen Rohlingen oder vorgebackenen Produkten frisch zu backende Teigwaren fertigen sollen, einmalig über eine Eingabeeinrichtung in ein Gargerät eingegeben und gespeichert werden, so dass dann nach jedem morgendlichen Start des Gargeräts dieses zuerst seinen Garraum aufheizt und dann die vorgegebene Programme sozusagen in einem Stapel abarbeitet, und zwar unter besonderer Berücksichtigung einer Zeit- und Energieoptimierung.

Die DE 10 2006 008 096 A1 offenbart ein Verfahren zum Führen von Garprogrammen in einem Garraum eines Gargerätes für zu unterschiedlichen Zeitpunkten und auf unterschiedlichen Behandlungsebenen in einem Garraum eingebrachte Gargüter. Zu einem Startzeitpunkt werden die zu einem späteren Zeitpunkt mit Gargut zu beladenden Behandlungsebenen ausgewählt. Nach einer Beladung des Gargerätes mit Gargütern wird ein Garraumklima in Abhängigkeit von der Beladung eingestellt, und es werden im Anschluss Signale für ein Entnehmen eines Gargutes oder der Gargüter durch das Gargerät ausgegeben. In einer Speichereinheit sind Zubereitungsprogramme hinterlegt, die durch eine Eingabe einer Gargutart aufgerufen werden können.

In der DE 20 2004 018 719 U1 ist ein Bedienelement für ein Gargerät, umfassend ein Touchscreen mit einer Displayanzeige samt einer Vielzahl von Touchelementen, die von einem Benutzer betätigt werden können, beschrieben. Eine strukturierte Anordnung von Haupt- und Unterbedienebenen eines Bedienmenüs auf dem Touchscreen sollen dabei eine übersichtliche Führung und Einstellung eines Gargerätes über das Bedienelement ermöglichen.

In der WO 2008/084917 A1 sind ein System und eine Methode für eine Steuerung eines Gargeräts beschrieben. Eine Bedienerkonsole für das Gargerät beinhaltet dabei eine Vielzahl von Knöpfen, darunter einen Vorschlagsknopf, welcher Vorschläge für eine Steuerung des Gargeräts auf Basis einer Identifizierung von Nahrungsmitteln ermöglicht. Nach einer Identifizierung eines Nahrungsmittels können Rezepte von Gerichten, die mit dem identifizierten Nahrungsmittel gekocht werden können, vorgeschlagen werden, wobei eine Identifizierung beispielsweise mittels eines Radio Frequency (RF-) Tags erfolgen kann. Es ist weiterhin möglich, dass basierend auf mehr als einem identifizierten Nahrungsmittel Gerichte vorgeschlagen werden. Auf der Grundlage von identifizierten Nahrungsmitteln können somit Rezeptvorschläge unterbreitet und mittels eines Kochmethodenknopfes detaillierte Kochmethoden, bezogen auf beispielsweise vorgeschlagene Rezepte, empfohlen werden. Ein Modifikationsknopf ermöglicht eine Anpassung der Steuerung des Gargeräts entsprechend der vorgeschlagenen Kochmethode an die Wünsche eines Benutzers. Weiterhin ermöglicht das bekannte Verfahren, Informationen über ein Nahrungsmittel, das verarbeitet werden soll, zu einem Server zu übermitteln, der optimale Steuerungsinformationen für ein zu garendes Nahrungsmittel über ein Netzwerk zu einem Gargerät überträgt.

In der EP 1 798 479 A1 ist ein Verfahren zum Betrieb eines Gargerätes offenbart, bei dem zu einem Garprogramm eines ersten ausgewählten Garguts weitere passende Gargüter oder Garprogramme in Abhängigkeit von Garparametern des ersten Garguts automatisch zugeordnet und diese für eine Auswahl durch einen Benutzer angezeigt werden. Eine solche automatisierte Zuordnung von weiteren passenden Gargütern oder Garprogrammen kann dabei auch in Abhängigkeit von einer Vielzahl bereits ausgewählter Gargüter bzw. Garprogrammen erfolgen.

Netzwerke von Gargeräten sind im Stand der Technik ebenfalls bekannt. In der DE 202 03 117 Ul ist beispielsweise eine Vorrichtung zur Wärmebehandlung von Lebensmitteln mit mindestens einem Ofenmodul und mit mindestens einem programmierbaren Bedienteil, das mit dem Ofenmodul zu dessen Steuerung über einen Bus gekoppelt ist, bekannt, wobei jedes Bedienteil und jedes Ofenmodul über mindestens eine Schnittstelle mit dem Bus gekoppelt ist. Auf einem Anzeigefeld einer Anzeigeeinrichtung des Bedienteils eines Ofenmoduls können kontextsensitive Hilfeinformationen angezeigt werden.

In der WO 96/03681 A2 ist ein Verfahren zur Zubereitung eines aus mehreren Einzelspeisen bestehenden Gerichtes offenbart, wobei die Einzelspeisen jeweils in einem gesonderten Gargerät zubereitet werden. Die einzelnen Gargeräte werden durch eine zentrale Steuerungsanlage hinsichtlich ihrer Zubereitungszeit oder ihrer Zubereitungs-Anfangszeit so gesteuert, dass ein praktisch gleichzeitiges Garende der einzelnen Speisen erreicht werden kann.

Die WO 2007/035852 A2 beschreibt ein Verfahren und ein Gerät zum Bestimmen einer Art und Menge von Nahrungsmitteln, die in einem Gargerät verarbeitet werden. Das Gargerät verfügt zu diesem Zweck über einen Controller, dem Informationen entweder manuell oder über einen Einsatz von RFID-Chips eingegeben werden und der mit einem Server verbunden ist, der über eine Datenbank verfügt, die die Anzahl jedes verarbeiteten Nahrungsmittels erfasst und auch automatisch ein Inventar erstellen kann. Dabei kann eine Vielzahl von Gargeräten über mehrere Controller mit dem Server verbunden sein.

In der WO 97/41392 A2 ist ein Netzwerk zur Überwachung und Wartung einer großen Anzahl von räumlich verteilt aufgestellten Gargeräten offenbart, das mittels einer Steuerzentrale gesteuert wird. Eine Kommunikation zwischen der Steuerzentrale und den Gargeräten erfolgt über zwischengeschaltete Basisstationen, die eine zentrale Steuerung und Überwachung einer Wartung, einer Reparatur und eines Energiemanagements der Gargeräte ermöglichen. Weiterhin kann in dem Verfahren auch vorgesehen sein, dass eine Buchhaltung zentral über die Steuerzentrale durchgeführt wird. Auch eine Anbindung von Verkaufspunkten an eine Buchhaltungs- und Rechnungsdatenbank, welche automatisch aktualisiert werden kann, wird ermöglicht.

In der nicht vorveröffentlichten DE 10 2008 009 659 ist ein Gargerätenetzwerk beschrieben, bei dem ein Gargerät Daten erzeugt, die geeignet sind, den Betrieb eines weiteren Gargeräts zu beeinflussen, so dass sich der Garbetrieb in unterschiedlichen Gargeräten synchronisieren lässt. Wenn bspw. große Mengen einer Speise zubereitet werden sollen, die nicht in einem einzigen Gargerät Platz finden, können die Speisen einfach auf zwei Gargeräte aufgeteilt werden, da durch die ausgetauschten Daten sichergestellt wird, dass der Garbetrieb, der in einem signalgebenden Gargerät durchgeführt wird, auf identische Weise in dem weiteren Gargerät durchgeführt wird. Effektiv kann durch diese Funktion aus zwei an sich autarken und unabhängigen Gargeräten ein Gargerät mit doppelter Kapazität geschaffen werden.

Auch Warenwirtschaftssysteme in Kombination mit Gargeräten sind an sich bekannt. So ist beispielsweise in der DE 10 2008 031 378 A1 die Erfassung eines Warenein- und ausgangs an einem Gargerät zur Verbesserung einer Lagerhaltung bekannt.

In der EP 1 719 411 A2 ist ein Verfahren zur Steuerung einer automatischen Backvorrichtung in einem Verkaufsgeschäft mit einem Backofen, einer Zufuhrvorrichtung für die Zufuhr von Backrohlingen und einer Transportvorrichtung für den Transport der Backrohlinge von der Zufuhrvorrichtung durch den Innenraum des Backofens zu einer Abgabestation, an der die fertigen Backwaren für Kunden bereitgestellt werden, offenbart, wobei eine Datenverarbeitungseinheit die Menge der bereitgestellten Backwaren erfasst und über ein Datennetz von dem Kassensystem des Verkaufsgeschäfts die Anzahl der verkauften Backwaren empfängt und durch Vergleich dieser Werte ein Nachbacken durch die Backvorrichtung veranlasst.

Aufgabe der vorliegenden Erfindung ist es, ein gegenüber den bekannten Verfahren derart weiterentwickeltes Verfahren bereitzustellen, das eine höhere Funktionalität bei gleichzeitig weiterer Automatisierung ermöglicht. Auch soll durch das erfindungsgemäße Verfahren dem Bedürfnis entgegengekommen werden, dass z. B. nach einer Eingabe eines geplanten Menüs und einer gewünschten Anzahl hiervon automatisch ein Arbeitsablauf unter Berücksichtigung von idealen Garprozessen und zur Verfügung stehenden Gerätekapazitäten einer Vielzahl von potentiell einsetzbaren Gargeräten erstellt wird. Die Möglichkeit einer Anbindung von Gargeräten an ein Warenwirtschaftssystem, welches benötigte Nahrungsmittel automatisch bei Bedarf bestellt, vorzugsweise mit einer Anbindung an ein Controllingsystem für eine automatische Kalkulation der Kosten für einen Wareneinsatz, Personal- und/oder Energiekosten, um eine instantane, alle anfallenden Kostenpositionen berücksichtigende Bepreisung der zuzubereitenden Nahrungsmittel zu ermöglichen, ist ebenfalls wünschenswert, da bisher ein Produktionsablauf in Restaurants und/oder Kantinen oftmals nur durch Erfahrungswerte einer Küchenmannschaft bestimmt ist. Auch sollen Erfahrungswerte einer Küchenmannschaft für einen Produktionsablauf erlernbar und/oder bekannte Erfahrungswerte bereits vorab in einem System von Gargeräten zur Verfügung gestellt werden.

Die Aufgabe wird erfindungsgemäß durch ein Verfahren gemäß Anspruch 1 gelöst. Weitere vorteilhafte Verfahren sind in den Ansprüchen 2 bis 8 beschrieben. Auch liefert die Erfindung ein Gargerät gemäß Anspruch 9. Des weiteren liefert die Erfindung ein System gemäß Anspruch 10. Eine vorteilhafte Weiterbildung eines solchen Systems liefert Anspruch 11.

Bei einer automatischen Kommunikation zumindest eines Gargeräts mit zumindest einem Warenwirtschaftssystem kann ein Verfahren zum Bestimmen eines Arbeitsablaufes in dem Gargerät weiter automatisiert werden und selbstlernend sein, indem beispielsweise eine Bedienperson ein bestimmtes, mehrere Gargüter umfassendes Menü auswählt und dann, je nach Wunsch, entweder die Anzahl an Menüs, die meist der Anzahl an zu bekochender Personen entspricht, manuell eingibt oder sich hierzu einen Vorschlag über das Warenwirtschaftssystem zwecks optimaler Garung vorhandener Gargüter unterbreiten lässt, so dass dann im Anschluss das Menü für die ausgewählte Anzahl fertig gestellt werden kann, wobei sich an eine Verspeisung der erstellten Menüs ein Selbstlernungsprozess insofern anschließt, als dass die Bedienperson sodann für die verschiedenen Gargüter des Menüs manuell eingeben kann, ob eine überschüssige Menge oder Fehlmenge an einzelnen Gargütern vorliegt, so dass für zukünftige Verfahren die vom Warenwirtschaftssystem vorgeschlagene Anzahl an Menüs, samt Gargutmengen, an diese Mengeninformationen automatisch angepasst ist. Da beispielsweise in jeder Großküche unterschiedliche Bedürfnisse an spezielle Menüs gestellt werden, beispielsweise in Abhängigkeit davon, ob mehr ältere Menschen oder jüngere Menschen begart werden sollen, kann so eine Anpassung an die speziellen Bedürfnisse einer Großküche stattfinden, was wiederum den Arbeitsablauf in dieser Großküche vereinfacht.

Bei den Gargeräten kann es sich beispielsweise um SelfCooking Centers® oder VarioCooking Centers® handeln, wobei selbstverständlich jedes andere Gargerät ebenso geeignet ist.

Ein Ziel der Erfindung ist es, einen Arbeits- bzw. Produktionsablauf in beispielsweise Restaurants und/oder Kantinen, also der Großküche, der bislang oftmals nur durch Erfahrungswerte einer Küchenmannschaft bestimmt wird, derart zu optimieren, dass besagte Erfahrungswerte mittels beispielsweise eines Systems von lernfähigen Gargeräten automatisiert berücksichtigt werden können. Dabei kann auch vorgesehen sein, dass den Gargeräten herstellerseits bereits grundlegende Erfahrungswerte einprogrammiert und in zumindest einer dafür geeigneten Speichereinrichtung gespeichert sein können, um im Laufe des Betriebs der Gargeräte an die speziellen Bedürfnisse des jeweiligen Restaurants bzw. der jeweiligen Kantine angepasst zu werden. Schnittstellen zwischen Mitgliedern der Küchenmannschaft untereinander und/oder einer Vielzahl von Gargeräten und/oder Systemen innerhalb des gesamten Produktionsablaufes können dabei über Funktionen des erfindungsgemäßen Verfahrens realisiert und somit ersetzt werden. Mögliche Fehlerquellen, beispielsweise durch eine fehlerhafte manuelle Eingabe, können ferner reduziert und ein Ausfall von einzelnen Bedienpersonen mit speziellem Wissen leichter kompensiert werden.

Das erfindungsgemäße Verfahren kann für eine Vielzahl an Gargeräten, die vorzugsweise untereinander vernetzt sind und somit miteinander in Wechselwirkung stehen, eingesetzt werden. Dann kann einem Benutzer angezeigt werden, zu welchem Zeitpunkt welches Gargerät mit welchem Gargut be- und/oder entladen werden soll.

Zudem kann vorgesehen sein, dass zumindest ein Gargerät nicht nur mit mindestens einem Warenwirtschaftssystem, sondern auch mit mindestens einem Controllingsystem verbunden ist. Auch kann selbstverständlich vorgesehen sein, dass eine Vielzahl von untereinander vernetzten Gargeräten mit einer Vielzahl von Warenwirtschafts- und/oder Controllingsystem, je nach Bedarf, verbunden sein können.

Eine weitere Vereinfachung entsteht erfindungsgemäß dadurch, dass zum Bestimmen eines Arbeitsablaufes auch Vorschläge zu einer Zubereitung und/oder einem Zubehör und/oder einem Gargerät bei einer Vielzahl von auswählbaren Gargeräten und/oder eine Gargerätebelegung unterbreitet werden. Dabei kann des Weiteren eine Optimierung an Ressourcen, wie Wasser, Energie, Platz, Kosten und dergleichen, errechnet werden.

Weiterhin können von einem der Gargeräte Vorschläge für Arbeitsablaufpläne unter Berücksichtigung von idealen Garprozessen und benötigten sowie vorhandenen Gerätekapazitäten erstellt werden.

Die bestimmte benötigte Anzahl an Gargüter kann zudem mit dem in dem mindestens einem Warenwirtschaftssystem erfassten, also vorhandenen bzw. verfügbaren Bestand, abgeglichen werden. Im Falle einer erkannten Fehlmenge kann dann auch eine automatische Nachbestellung durch das Warenwirtschaftsystem erfolgen.

Auch kann vorgesehen sein, dass der Arbeitsablauf nicht nur ein Tagesmenü, sondern ein Menü für mindestens zwei Tage oder für eine Woche umfasst. In diesem Fall können nicht nur optimale Tagesabläufe für eine Zubereitung vorgeschlagen werden, sondern es ist auch möglich, eine tagesübergreifende Vorproduktion mit dem Ziel einer verbesserten Kapazitätsauslastung und Zusammenfassung ähnlicher/gleicher Gargüter zu empfehlen.

Die Bestimmung eines Arbeitsablaufs, der auch eine tagesübergreifende Vorproduktion umfassen kann, kann offensichtlich unter einer Vielzahl von Optimierungsparametern, bspw. unter energetischen Gesichtspunkten, einer minimalen eingesetzten Arbeitszeit, einer minimalen Dauer einer Gerätebelegung, einer verbesserten Kapazitätsauslastung, einer Zusammenfassung ähnlicher/gleicher Gargüter und/oder einer Reduzierung eines Gargutgewichtsverlustes, einer Verschmutzung, einer Rauchentstehung und/oder eines Geruchs, erfolgen. Auch ist es offensichtlich, dass eine Vielzahl alternativer Optimierungsziele verfolgt werden können.

Weiterhin kann vorgesehen sein, dass eine Anbindung der Gargeräte an zumindest ein Controllingsystem eine direkte Berechnung und Abrechnung aller in einem Restaurant und/oder einer Kantine anfallenden Kostenpositionen ermöglichen kann. Dabei werden alle Informationen und Berechnungen von einem der Gargeräte an zumindest ein Controllingsystem weitergeleitet, welches beispielsweise die Kosten eines Wareneinsatzes, Personalkosten, Kosten für jedes erzeugte Gericht und/oder Kosten für jeden Gast oder Konsumenten errechnet. Dabei ist selbstverständlich vorgesehen, dass eine Vielzahl weiterer Kostenpositionen, wie Energiekosten, Wartungsaufwendungen oder dergleichen, bei Bedarf bestimmbar und direkt einpreisbar sind.

Nach einer Bestimmung eines Arbeitsablaufs kann erfindungsgemäß auch vorgesehen sein, dass auf einer Anzeigeeinrichtung Zubereitungsvorschläge, Zubehörvorschläge und/oder Gerätebelegungsvorschläge auf einer Anzeigeeinrichtung graphisch visualisiert werden. Dabei ist es offensichtlich möglich, dass sowohl eine Übersicht von Arbeitsabläufen über mehrere Tage, eine Tagesansicht und/oder ein freiwählbarer Ausschnitt eines Arbeitsablaufs innerhalb eines Tages angezeigt werden können.

Auch ist es offensichtlich, dass jederzeit zusätzliche Menüs eingebbar sind und bereits getätigte Eingaben verändert oder gelöscht werden können, was jeweils zu einer automatischen Anpassung des Arbeitsablaufs führen kann.

Durch den Einsatz eines erfindungsgemäßen Verfahrens kann somit eine manuelle Vorplanung von Arbeitsabläufen entfallen, ein Änderungswesen professionalisiert werden und/oder Unter- und/oder Überbestände an Gargütern durch automatisierte Warenbestellungen deutlich reduziert werden. Weiterhin ermöglicht das erfindungsgemäße Verfahren eine Qualitätsverbesserung durch eine Reduzierung von Fehlern, beispielsweise durch den Einsatz falschen Zubehörs, und/oder von Warmhaltezeiten. Auch ist eine deutlich verbesserte Kostenkontrolle und Sicherung einer Gewinnsituation durch exaktere Daten möglich, da alle anfallenden Kostenpositionen instantan berücksichtigt werden können und auch eine automatische Abrechnung erfolgen kann. Zudem können keine Berechnungsfehler bei einer Bepreisung der zubereiteten Gerichte entstehen, da eine exakte Berechnung der Kosten durch wenigstens ein Controllingsystem erfolgt. Weiterhin können Erfahrungswerte einer Küchenmannschaft personenunabhängig erhalten werden, auch wenn einzelne Personen, beispielsweise wegen Krankheit oder altersbedingt, nicht mehr zur Verfügung stehen.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert sind. Dabei zeigt:
- Figur 1: ein erfindungsgemäßes System von Gargeräten mit einer Anbindung an ein Warenwirtschafts- und Controllingsystem;
- Figur 2: ein Flussdiagramm zur Veranschaulichung von Arbeitsabläufen eines erfindungsgemäßen Verfahrens für eine Erstellung von Arbeitsablauf, automatisierten Bestellungen und/oder Kostenkalkulationen;
- Figur 3: eine beispielhafte Darstellung eines ersten Anzeigebereichs für ein System nach Figur 1 mit einer Auswahl eingegebener Menübestandteile;
- Figur 4: eine Darstellung einer Auswahl von benötigten Nahrungsmitteln für eine Zubereitung des Menüs aus Figur 3;
- Figur 5: eine stark vereinfachte Darstellung von Arbeitsablaufvorschlägen für eine Zubereitung des Menüs aus Figur 3; und
- Figur 6: eine beispielhafte Berechnung von Kostenpositionen mittels eines Controllingsystems für das in Figur 3 eingegebene Menü.

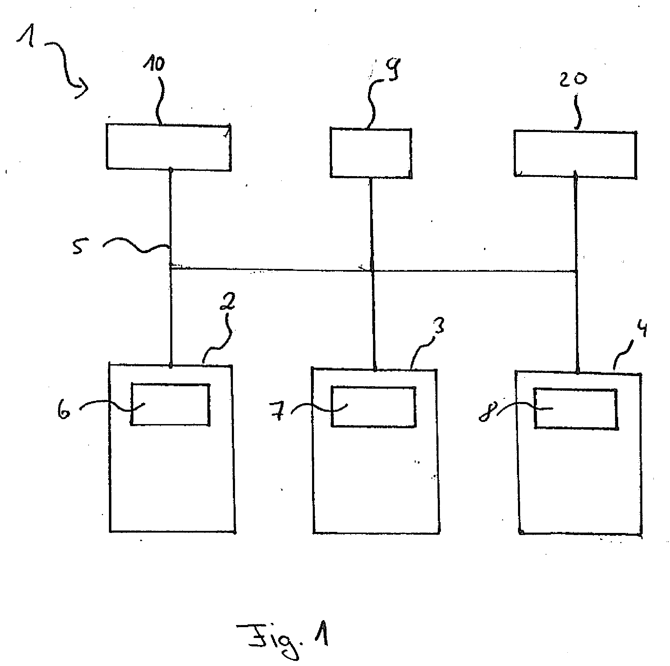

In Figur 1 ist beispielhaft ein erfindungsgemäßes System 1 von erfindungsgemäßen Gargeräten, bestehend aus einem ersten Gargerät 2, einem zweiten Gargerät 3 und einem dritten Gargerät 4, die über ein Netzwerk 5 verbunden sind, für eine Durchführung eines erfindungsgemäßen Verfahrens dargestellt. Bei den Gargeräten 2, 3, 4 kann es sich bspw. jeweils um ein seitens der Anmelderin unter dem Handelsnamen SelfCooking Center® oder unter dem Handelsnamen VarioCooking Center® vertriebenes Gargeräte handeln. Eine Eingabe der für eine Durchführung des erfindungsgemäßen Verfahrens benötigten Parameter kann sowohl über eine erste Anzeige- und Eingabeeinrichtung 6 des ersten Gargeräts 2, eine zweite Anzeige- und Eingabeeinrichtung 7 des zweiten Gargeräts 3, eine dritte Anzeige- und Eingabeeinrichtung 8 eines dritten Gargeräts 4 als auch über eine externe Anzeige- und Eingabeeinrichtung 9, die mit dem Netzwerk 5 verbunden ist, erfolgen, wobei die Anzeige- und Eingabeeinrichtungen 6, 7, 8, 9 jeweils vorzugsweise in Form eines Sensorbildschirms oder Touchscreens ausgebildet sein können. Bei dem Netzwerk 5 kann es sich sowohl um ein drahtgebundenes als auch ein drahtloses Netzwerk (nicht gezeigt) handeln.

Zur Durchführung des erfindungsgemäßen Verfahrens kann weiterhin eine Anbindung eines Warenwirtschaftssystems 10, beispielsweise ein seitens der Anmelderin vertriebenes Combi-Link®-System, und eines handelsüblichen Controllingsystems 20 mit den Gargeräten 2, 3, 4 über das Netzwerk 5 vorgesehen sein.

Es ist offensichtlich, dass das in Figur 1 dargestellte System 1 von Gargeräten beispielhaft zu verstehen ist und eine beliebige Anzahl von Gargeräten für eine Durchführung des erfindungsgemäßen Verfahrens eingesetzt werden kann. Weiterhin ist es selbstverständlich möglich, dass weitere Anzeige- und Eingabeeinrichtungen für eine Eingabe der benötigten Parameter vorgesehen sein können. Auch kann vorgesehen sein, dass neben einem Einsatz eines Warenwirtschaftssystem 10 und eines Controllingsystems 20 für beispielsweise unterschiedliche Lagerorte und/oder unterschiedliche Kostenstellen eine jeweils benötigte Anzahl solcher Systeme zum Einsatz kommen kann, und es ist selbstverständlich auch ein Einsatz eines gemeinsamen, kombinierten Warenwirtschafts- und Controllingsystems naheliegend.

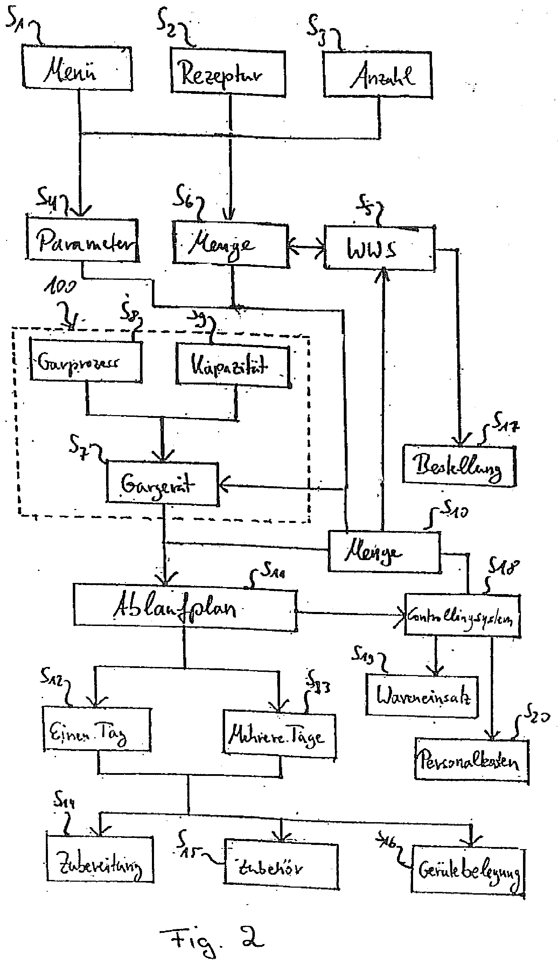

In Figur 2 ist ein Flussdiagramm abgebildet, das mögliche Abläufe eines erfindungsgemäßen Verfahrens für eine Erstellung zumindest eines Arbeitsablaufes, mindestens einer Kostenkalkulation und/oder wenigstens einer automatisierten Warenbestellung anhand des in Figur 1 beispielhaft gezeigten Systems 1 von Gargeräten 2, 3, 4 darstellt.

In einem Schritt S1 kann von einem Benutzer ein Menü, also ein Gericht bzw. eine Speise, und/oder in einem Schritt S2 eine Rezeptur sowie optional eine gewünschte Anzahl, siehe Schritt S3, über eine der in Figur 1 beispielhaft dargestellten Anzeige- und Eingabeeinrichtung 6, 7, 8, 9 eingegeben werden. Ein in dem Schritt S1 eingegebenes Menü wird durch mehrere Gargüter bestimmt, wobei der Benutzer alle Gargüter einzeln eingeben kann und/oder eine Eingabe eines Namens eines Menüs erfolgt, beispielsweise "Schweinegulasch", wobei die für das über die Nennung eines Namens eingegebene Menü benötigten Gargüter in einer nicht gezeigten Datenbank mit schon gespeicherten Erfahrungswerten zu Garparametern und dergleichen hinterlegt sein können und bei Bedarf automatisch abrufbar sind. Auch für die im Schritt 2 eingegebene Rezeptur können die benötigten Gargüter entweder manuell eingegeben oder aus besagter Datenbank automatisch abgefragt werden.

Basierend auf einer manuellen Eingabe von Parametern gemäß der Auswahl des Schritts S1 oder S2 und ggf. S3 im Schritt S4 kann eine Eingabe einer benötigten Menge an Gargütern entweder in einem Schritt S6 erfolgen oder durch einen Versand von Informationen eines Warenwirtschaftssystems, siehe Schritt S5, unnötig sein, da bereits vorliegend, nämlich wenn beispielsweise bereits entsprechende Erfahrungswerte dem System bekannt sind. Änderungen des Menüs aus Schritt S1, der Rezepturen aus Schritt S2 der gewünschten Anzahl an Menüs aus Schritt S3, und/oder der gewünschten Menge an Gargütern aus Schritt S4 beispielsweise aus Gründen der Verfügbarkeit oder auf Wunsch des Benutzers, können jederzeit erfolgen und werden in den folgenden Schritte automatisch für die benötigten Berechnungen berücksichtigt.

Die Eingabe aus Schritt S4 bzw. die Information aus Schritt 6 wird in einem Schritt S7 von einem Gargerät unter Berücksichtigung von in dem Gargerät hinterlegten Garprozessen, siehe Schritt S8, und einer hinterlegten Kapazität des Gargeräts, siehe Schritt S9, verarbeitet. Dabei errechnet das Gargerät unter Einbeziehung der Eingaben des Schritts S1 oder S2 und ggf. S3 die idealen Garprozesse und benötigten Gerätekapazitäten. Die benötigten Mengen an jeweiligen Gargütern, samt Gewürzen und/oder weiteren benötigten Zutaten, sofern sie nicht bereits durch Schritt S4 oder S6 festgelegt wurden, können auch vom Gargerät bestimmt werden. Die im Schritt S7 ermittelte benötigte Menge an Gargütern wird dann in einem Schritt S10 sowohl an das Warenwirtschaftssystem, siehe Schritt S5, zur Aktualisierung weitergeleitet als auch an ein Controllingsystem, siehe Schritt S18, so dass eine Selbstanlernung vorliegt.

Wird eine Differenz zwischen der benötigten Menge und der vorhandenen Menge an Gargütern von dem Warenwirtschaftssystem festgestellt, kann mindestens eine automatische Bestellung in einem Schritt S17 der zusätzlich benötigten Gargüter durch das Warenwirtschaftssystem in Schritt S5 veranlasst werden. Dabei kann auf Mindestbestandsmengen, die eine Nachbestellung auslösen, zurückgegriffen werden.

Weiterhin wird zumindest ein Arbeitsablaufplan (Schritt S11) mittels von im Gargerät aus Schritt S7 festgelegten, benötigten Ressourcen, insbesondere bestimmt durch Energie, Wasser, Zeit und Platz, automatisch erstellt, um z. B. zu einem energetisch optimalen Ablauf und/oder einer maximalen Geräteauslastung zu führen.

Der mindestens eine erzeugte Arbeitsablaufplan kann dem Benutzer auf einer der in Figur 1 beispielhaft dargestellten Anzeige- und Eingabeeinrichtung 6, 7, 8, 9 visualisiert dargestellt werden, so dass erkenntlich wird, zu welchem Zeitpunkt die jeweilig benötigten Gargüter in welches oder welche Gargeräte, wie beispielsweise die Gargeräte 2, 3, 4 aus Figur 1, beladen bzw. aus demselben/denselben entladen werden müssen.

Der in Schritt S11 erstellte Arbeitsablauf kann dabei für einen Tag, siehe Schritt S12, oder für mehrere Tage, siehe Schritt S13, entsprechend den Anforderungen aus den zugrunde liegenden Information in Schritt S6 und S7, erstellt werden. Um eine verbesserte Kapazitätsauslastung zu erreichen und/oder ein Zusammenfassen gleicher Gargüter (nicht dargestellt) zu ermöglichen, werden bei einer Erstellung eines Ablaufplans für zumindest zwei Tage, siehe Schritt S11, in dem Schritt S13 gleiche Gargüter zusammengefasst, und es kann eine tagesübergreifende Vorproduktion empfohlen werden.

Der Arbeitsablaufplan kann dabei unter Einbeziehung einer Vielzahl von Parametern optimiert werden. Beispielsweise ist denkbar, dass der Arbeitsablaufplan, ggf. umfassend eine tagesübergreifende Vorproduktion, unter energetischen Gesichtspunkten optimiert wird, eine verbesserte Kapazitätsauslastung erreicht und/oder eine Zusammenfassung ähnlicher/gleicher Gargüter berücksichtigt wird. Auch kann es selbstverständlich möglich sein, dass eine eingesetzte Arbeitszeit oder eine Dauer einer Gerätebelegung minimiert wird. Es ist also offensichtlich, dass eine Optimierung unter einer Vielzahl von weiteren Parametern erfolgen kann.

Weiterhin werden Informationen aus dem Arbeitsablaufplan von Schritt S11 an das Controllingsystem, siehe Schritt S18, weitergeleitet, welches automatisch unter Berücksichtigung der benötigten Mengen, siehe Schritt S10, die Kosten eines Wareneinsatzes in einem Schritt S19 und/oder Personalkosten, siehe Schritt S20, sowie weitere Kostenpositionen (nicht gezeigt) berechnen kann. Neben einer Berechnung der Kosten für den Wareneinsatz aus Schritt S19 und der Personalkosten in Schritt S20 ist beispielsweise denkbar, dass Kosten für jede erzeugte Speise und/oder jedes Menü, wahlweise kumuliert und/oder pro Konsument, berechnet werden können. Dabei ist es offensichtlich, dass die beschriebenen Kostenpositionen beispielhaft zu verstehen sind und selbstverständlich beliebige andere Kostenpositionen bestimmbar sind.

Nach der Erstellung eines Ablaufplanes in Schritt S11 für einen Tag (Schritt S12) oder mehrere Tage (Schritt S13) können beispielsweise Zubereitungsvorschläge in einem Schritt S14, Zubehörvorschläge in einem Schritt S15 und/oder Gerätebelegungsvorschläge in einem Schritt S16 von dem Gargerät bestimmt und auf einer der Anzeige- und Eingabeeinrichtung 6, 7, 8, 9 aus Figur 1 dem Benutzer dargestellt werden. Dabei kann dem Benutzer wahlweise eine Übersicht über einen Arbeitsablauf oder ein Ausschnitt aus demselben angezeigt werden. Wahlweise können selbstverständlich auch Zubereitungs- und/oder Zubehörvorschläge dargestellt werden. Entsprechende Wechsel zwischen den verschiedenen Anzeigen können dabei beispielsweise anhand von nicht gezeigten Bedienelementen erfolgen.

Es ist auch möglich, dass am Ende eines Ablaufplans, wie z. B. am Ende eines Produktionstages, überschüssige und/oder zu geringe Mengen an Gargütern erfasst und/oder eingegeben werden, um daraus eine Änderung eines Menüs, einer Rezeptur, einer Menge oder dergleichen zu bestimmen und zukünftig zu berücksichtigen, so dass ein Selbstanlernen und somit eine ständige Verbesserung stattfindet. Auch ist es offensichtlich, dass anstelle einer direkten Änderung beispielsweise einer Rezeptur einem Benutzer ein Vorschlag unterbreitet wird, der im Fall einer Annahme zu einer Änderung führt. Weiterhin ist das erfindungsgemäße Verfahren selbstverständlich nicht auf einen Einsatz eines Gargeräts in Schritt S7 mit in den Schritten S8 und S9 hinterlegten Garprozessen und der Gerätekapazität beschränkt. Es kann offensichtlicher Weise vorgesehen sein, dass eine Vielzahl von Gargeräten entsprechend des Systems 1 gemeinsam eingesetzt wird, die beispielsweise entsprechend der Darstellung in Figur 1 über ein Netzwerk 5 mit dem Warenwirtschafts- und/oder Controllingsystemen verbindbar ist.

Durch eine Anbindung von untereinander vernetzten Gargeräten an ein Warenwirtschafts- und/oder Controllingsystem kann ein Änderungswesen professionalisiert werden, durch das Unter- und/oder Überbestände reduziert werden können.

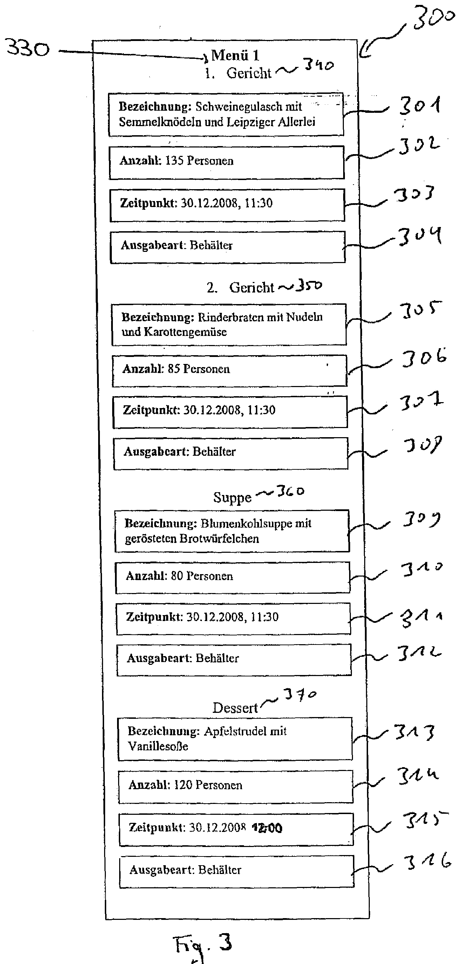

Figur 3 stellt einen ersten Anzeigebereich 300 auf einer der Anzeige- und Eingabeeinrichtung 6, 7, 8, 9 von Figur 1 mit einem ersten Menü 330 dar, das von dem erfindungsgemäßen Verfahren entsprechend Figur 2 weiterbearbeitet werden kann. Eine Eingabe zu einem ersten Gericht 340 umfasst dabei eine Bezeichnung 301, hier "Schweinegulasch mit Semmelknödeln und Leipziger Allerlei", eine gewünschte Anzahl 302, hier für 135 Personen, einen Zeitpunkt 303, an dem eine Ausgabe erfolgen soll, hier 11:30 Uhr am 30.12.2008, sowie eine benötigte Ausgabeart 304, hier in einem Behälter. Weiterhin umfasst das erste Menü 330 ein zweites, alternatives Gericht 350 mit einer Bezeichnung 305 "Rinderbraten mit Nudeln und Karottengemüse", für eine Anzahl 306 von 85 Personen, mit einem Ausgabezeitpunkt 307 am 30.12.2008 um 11:30 Uhr und einer Ausgabeart 308 über einen Behälter. Zudem kann vorgesehen sein, dass das erste Menü 330 auch eine Vorspeise 360 und eine Nachspeise 370 aufweist. Dabei kann es sich bei der Vorspeise 360 beispielsweise um eine Suppe handeln, die durch eine Bezeichnung 309 "Blumenkohlsuppe mit gerösteten Brotwürfelchen", eine Anzahl 310 von 80 Personen, einen Ausgabezeitpunkt 311 am 30.12.2008 um 11:30 Uhr und eine Ausgabeart 312 in einem Behälter spezifiziert ist. Entsprechend kann das Dessert 370 durch eine Bezeichnung 312 "Apfelstrudel mit Vanillesoßen", eine Anzahl 314 von 120 Personen, einen Zeitpunkt 315 am 30.12.2008 um 12 Uhr und eine Ausgabeart 316 in Behältern bestimmt werden.

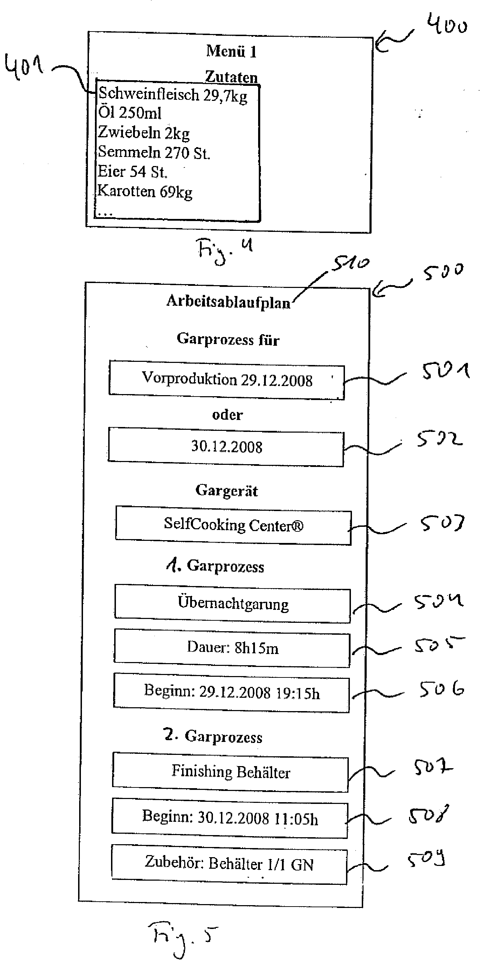

Für das in Figur 3 dargestellte erste Menü 330 kann von einem der beispielsweise in Figur 1 dargestellten Gargeräte 2, 3, 4 eine benötigte Menge an Gargütern bzw. Zutaten berechnet und auf einem zweiten Anzeigebereich 400 der Anzeige- und Eingabeeinrichtung, wie in Figur 4 gezeigt, visualisiert werden. Dabei werden die benötigten Zutaten 401 in dem zweiten Anzeigebereich 400 mit einer Bezeichnung und einer jeweils benötigten Menge einem Benutzer angezeigt, wie beispielsweise 29,7 kg Schweinefleisch, 250 ml Öl, 2 kg Zwiebeln, 270 Semmeln, 54 Eier und 69 kg Karotten.

Weiterhin können die errechneten Informationen, wie zu den Zutaten gemäß Figur 4, auch einem Warenwirtschaftssystem und/oder einem Controllingsystem zur Verfügung gestellt werden. Stellt das Warenwirtschaftssystem eine Differenz zwischen der Menge der benötigten Zutaten 401 und einer vorhandenen Menge fest, kann entsprechend der Beschreibung von Figur 2 eine automatische Bestellung an Zutaten ausgelöst werden. Auch kann vorgesehen sein, dass das Warenwirtschaftssystem automatisch alternative Nahrungsmittel, beispielsweise mit ablaufendem Haltbarkeitsdatum, einem Benutzer vorschlägt, um eine Verwertung dieser Zutaten sicherzustellen (nicht gezeigt).

Ferner kann einem Benutzer ein Arbeitsablaufplan, wie beispielhaft in Figur 5 in einem dritten Anzeigebereich 500 der Anzeige- und Eingabeeinrichtung dargestellt, angezeigt werden. Dabei kann ein Arbeitsablaufplan 510 einen ermittelten Garprozess für beispielsweise eine Vorproduktion 501 am Vortag eines gewünschten Ausgabezeitpunktes oder eine Zubereitung 502 am Tag des Ausgabezeitpunktes sowie ein dafür benötigtes Gargerät 503, beispielsweise ein SelfCooking Center® der Anmelderin vorschlagen. Ein Arbeitsablauf kann somit eine Vielzahl von Garprozessen umfassen, beispielsweise eine Übernachtgarung 504 mit einer Dauer 505 von acht Stunden und fünfzehn Minuten als ersten Garprozess, der einen Beginn 506 bereits einen Tag vor einer gewünschten Ausgabezeit, nämlich in dem gegebenen Beispiel am 29. Dezember 2008 um 19:15 Uhr haben soll. Als zweiten Garprozess kann dann ein Finishing 507, dessen Beginn 508 kurz vor dem gewünschten Ausgabezeitpunkt zeitlich angesetzt wird, nämlich um 11:05 Uhr, in einem 1/1 GN Behälter als Zubehör 509 vorgeschlagen werden. Die beiden beschriebenen Garprozesse sowie das eingesetzte Gargerät selbst sind beispielhaft zu verstehen, und es ist offensichtlich, dass beliebige weitere Garprozesse und der Einsatz alternativer Gargeräte vorgeschlagen werden können.

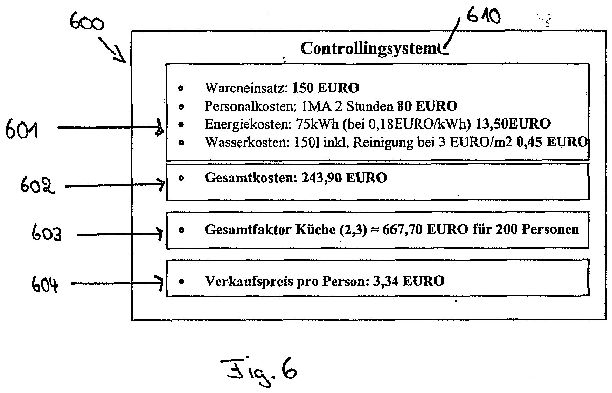

Figur 6 zeigt einen vierten Anzeigebereich 600 der Anzeige- und Eingabeeinrichtung zum Anzeigen eines "Controlling System" 600, in dem anfallende Kostenpositionen einem Benutzer angezeigt werden können. Dabei ist es denkbar, dass sowohl anfallende Einzelpositionen 601, beispielsweise bestehend aus einem Wareneinsatz, Personalkosten von EUR 80,00, Energiekosten von EUR 13,50 und/oder Wasserkosten von EUR 0,45, dargestellt werden, sowie anfallende Gesamtkosten 602 von EUR 243,90. Auch kann vorgesehen sein, dass allgemein anfallende Kostenpositionen, beispielsweise Abschreibungen auf Küchengeräte, in eine Kostenkalkulation einbezogen werden und beispielsweise in Form eines Gesamtfaktors Küche 603 anzeigbar sind. Ein Ziel des Einsatzes eines Controllingsystemes liegt zudem darin, einen Verkaufspreis 604, der für eine kostendeckende Produktion erzielt werden muss, zu bestimmen sowie anzuzeigen, hier EUR 3,34.

Es ist dabei offensichtlich, dass jeder der Anzeigebereiche 300, 400, 500, 600 sowohl einzeln, gemeinsam sowie in jeder denkbaren Kombination auf zumindest einer dafür geeigneten Anzeige- und Eingabeeinrichtung 6, 7, 8 oder 9 der Figur 1 dargestellt werden können.

Die in der voranstehenden Beschreibung, in den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: System von Gargeräten
- 2, 3, 4: Gargerät
- 5: Netzwerk
- 6, 7, 8, 9: Anzeige- und Eingabeeinrichtung
- 10: Warenwirtschaftssystem
- 20: Controllingsystem
- 300: Erster Anzeigebereich "Menüeingabe"
- 301: Bezeichnung
- 302: Anzahl
- 303: Ausgabezeitpunkt
- 304: Ausgabeart
- 305: Bezeichnung
- 306: Anzahl
- 307: Ausgabezeitpunkt
- 308: Ausgabeart
- 309: Bezeichnung
- 310: Anzahl
- 311: Ausgabezeitpunkt
- 312: Ausgabeart
- 330: erstes Menü
- 340: erstes Gericht
- 350: zweites Gericht
- 360: Vorspeise
- 370: Dessert
- 313: Bezeichnung
- 314: Anzahl
- 315: Ausgabezeitpunkt
- 316: Ausgabeart
- 400: zweiter Anzeigebereich "Benötigte Nahrungsmittel"
- 401: Nahrungsmittel
- 500: dritter Anzeigebereich "Arbeitslaufplan"
- 501: Garprozessausführung "Vorproduktion"
- 502: Garprozessausführung
- 503: Gargerät
- 504: erste Garprozessart
- 505: erste(r) Garprozessebenen
- 506: erster(r) Garprozessbeginn
- 507: zweite Garprozessart
- 508: zweiter Garprozessbeginn
- 509: Zubehör
- 510: Arbeitsablaufplan

- 600: vierter Anzeigebereich "Controllingsystem"
- 601: Einzelposition
- 602: Gesamtkosten
- 603: Vollkostenkalkulation
- 604: Verkaufspreis
- 610: Controllingsystem

## Patentansprüche

1. Verfahren zum Bestimmen eines zukünftigen Arbeitsablaufs mit einem Ablaufplan in zumindest einem Gargerät (2, 3, 4), bei dem
• zumindest ein Menü, das zumindest zwei Gargüter umfasst, ausgewählt wird,
• unter Berücksichtigung
• zumindest einer für das zumindest ein ausgewählte Menü charakteristischen ersten Größe und
• zumindest einer für ein Gargerät (2, 3 4) charakteristischen dritten Größe, die bestimmt wird durch zumindest eine Funktionseinrichtung des Gargeräts (2, 3, 4) und/oder durch die Bemaßung eines Garraums des Gargeräts (2, 3, 4) und/oder zumindest eine Beladungszone im Garraum des Gargeräts (2, 3, 4),
zuerst die Anzahl an Menüs eingegeben wird,
wobei eine Vielzahl von Werten der ersten und dritten Größe
• aus zumindest einer Speichereinrichtung abgerufen,
• auf zumindest einer Anzeigeeinrichtung (6, 7, 8, 9) angezeigt und
• über zumindest eine Bedieneinrichtung (6, 7, 8, 9) verändert werden können, und
zumindest ein Wert der ersten und dritten Größe nach Auswahl eines Menüs aus einer Vielzahl von Menüs zur Bestätigung oder Veränderung auf zumindest einer Anzeigeeinrichtung (6, 7, 8, 9) vorgeschlagen wird,
• im Anschluss der eingegebene Arbeitsablauf automatisch gestartet wird, und
• nach Abschluss des eingegebenen Arbeitsablaufs zumindest die charakteristische erste Größe, bestimmt durch die Anzahl an ersten und/oder zweiten Gargütern, für zukünftig Arbeitsabläufe an erfasste überschüssige Mengen an ersten Gargütern und/oder erfasste Fehlmengen an zweiten Gargütern automatisch angepasst wird, indem am Ende des Ablaufplans überschüssige und/oder zu geringe Mengen an Gargütern erfasst und eingegeben werden, um daraus eine Änderung einer Menge zu bestimmen und zukünftig zu berücksichtigen, so dass ein Selbstanlernen und somit eine ständige Verbesserung stattfindet.

2. Verfahren nach Anspruch 1, **dadurch gekennzeichnet, dass**
die Funktionseinrichtung ausgewählt wird aus einer Heizeinrichtung, einer Feuchtigkeitszufuhreinrichtung, einer Feuchtigkeitsabfuhreinrichtung, einer Fluidzuführeinrichtung, einer Fluidabführeinrichtung, einer Druckanlegeeinrichtung, einer Druckabbaueinrichtung, einer Garraumatmosphärenzirkulationseinrichtung, einer Zubehöreinrichtung, insbesondere in Form einer Gargutträgereinrichtung, und/oder einer Reinigungseinrichtung.

3. Verfahren nach Anspruch 1 oder 2, **dadurch gekennzeichnet, dass** die charakteristische erste Größe und/oder zumindest eine für eine Vielzahl ausgewählter Gargüter charakteristischen zweite Größe auch bestimmt wird durch
• zumindest einen Garprozess für ein Gargut,
• einen Gargrad eines Garguts,
• zumindest eine Zeitdauer eines Garprozesses und/oder Arbeitsablaufs,
• zumindest einen Zeitpunkt, vorzugsweise in Form eines Start- und/oder Endzeitpunkts eines Garprozesses und/oder Arbeitsablaufs,
• zumindest einen Preis, insbesondere in Form eines Kaufpreises eines Gargut und/oder Herstellungspreises eines Menüs,
• einen Ressourcenverbrauch durch einen Garprozess, insbesondere in Form eines Verbrauchs von Energie, Wasser, Zeit und/oder Platz im Garraum,
• eine Haltbarkeit eines Garguts,
• eine Verfügbarkeit,
• einen Gewichtsverlust,
• eine Schmutzerzeugung,
• eine Raucherzeugung und/oder
• eine Geruchserzeugung durch einen Garprozess.

4. Verfahren nach Anspruch 3, **dadurch gekennzeichnet, dass**
eine Vielzahl von Werten der zweiten Größe aus zumindest einer Speichereinrichtung abgerufen, auf zumindest einer Anzeigeeinrichtung (6, 7, 8, 9) angezeigt und/oder über zumindest eine Bedieneinrichtung (6, 7, 8, 9) verändert werden können.

5. Verfahren nach einem der vorangehenden Ansprüche, **dadurch gekennzeichnet, dass** eine Veränderung von Werten der ersten, zweiten und/oder dritten Größe gespeichert werden kann.

6. Verfahren nach einem der vorangehenden Ansprüche, **dadurch gekennzeichnet, dass** zumindest ein Wert der ersten und/oder dritten Größe nach Auswahl eines Menüs aus einer Vielzahl von Menüs und
• von Gargütern aus einer Vielzahl von Gargütern, vorzugsweise einschließlich einer Anzahl an Menüs und/oder Gargütern, und/oder
• eines Gargeräts aus einer Vielzahl von Gargeräten (2, 3, 4) und/oder
• zumindest eines Optimierungsparameters, insbesondere bestimmt durch zumindest einen Zeitpunkt, eine Zeitdauer, zumindest einen Ressourcenverbrauch, Kosten, eine Verschmutzung, eine Rauchentstehung und/oder eine Geruchsentstehung,
automatisch ausgewählt oder zur Bestätigung oder Veränderung vorgeschlagen wird bzw. werden, vorzugsweise durch Anzeige auf zumindest einer Anzeigeeinrichtung (6, 7, 8, 9).

7. Verfahren nach einem der vorangehenden Ansprüche 3 bis 6, **dadurch gekennzeichnet, dass**
zumindest ein Wert der zweiten Größe nach Auswahl
• von Gargütern aus einer Vielzahl von Gargütern, vorzugsweise einschließlich einer Anzahl an Gargütern, und/oder
• eines Gargeräts aus einer Vielzahl von Gargeräten (2, 3, 4) und/oder
• zumindest eines Optimierungsparameters, insbesondere bestimmt durch zumindest einen Zeitpunkt, eine Zeitdauer, zumindest einen Ressourcenverbrauch, Kosten, eine Verschmutzung, eine Rauchentstehung und/oder eine Geruchsentstehung,
automatisch ausgewählt oder zur Bestätigung oder Veränderung vorgeschlagen wird bzw. werden, vorzugsweise durch Anzeige auf zumindest einer Anzeigeeinrichtung (6, 7, 8, 9).

8. Verfahren nach einem der vorangehenden Ansprüche, **dadurch gekennzeichnet, dass** über ein Warenwirtschaftssystem eine automatische Nachbestellung an Gargütern stattfinden kann, vorzugsweise nach Auswahl eines Menüs und/oder einer Vielzahl von Gargütern, und/oder über ein Controllingsystem automatisch eine Preisberechnung stattfinden kann, insbesondere um auf einer Anzeigeeinrichtung, vorzugsweise nach Auswahl eines Menüs und/oder einer Vielzahl von Gargütern, einen Preis für zumindest ein Menü anzuzeigen.

9. Gargerät (2, 3, 4), das zum Durchführen eines Verfahrens nach einem der vorangehenden Ansprüche eingerichtet ist, mit zumindest einer Funktionseinrichtung, einer Anzeigeeinrichtung (6, 7, 8), einer Bedieneinrichtung (6, 7, 8) und einer Speichereinrichtung, wobei die Anzeigeeinrichtung und die Bedieneinrichtung vorzugsweise zumindest ein gemeinsames Touchscreen umfassen.

10. System (1), bestehend aus Gargeräten (2, 3, 4) nach Anspruch 9, einem Netzwerk (5) und Anzeige- und Eingabeeinrichtungen (6, 7, 8, 9), zum Durchführen eines Verfahrens nach einem der Ansprüche 1 bis 8, wobei vorzugsweise die Gargeräte (2, 3, 4) untereinander und mit zumindest einem Warenwirtschaftssystem und/oder einem Controllingsystem verbunden sind, vorzugsweise drahtlos und/oder über ein Intranet oder das Internet.

11. System (1) nach Anspruch 10, **dadurch gekennzeichnet, dass**
eine Anzeige- und Bedieneinrichtung (9) der Anzeige- und Eingabeeinrichtungen (6, 7, 8, 9) getrennt von den Gargeräten (2, 3, 4), vorzugsweise umfassend ein Touchscreen und/oder handhaltbar, bereitgestellt ist.

## Claims

1. A method for determining a future working sequence with a sequence plan in at least one cooking device (2, 3, 4), in which
• at least one menu, which comprises at least two items to be cooked, is selected,
• taking into account
• at least one first variable characteristic of the at least one selected menu and
• at least one third variable characteristic of a cooking device (2, 3, 4), which is determined by at least one functional device of the cooking device (2, 3, 4) and/or by the dimensioning of a cooking chamber of the cooking device (2, 3, 4) and/or at least one loading zone in the cooking chamber of the cooking device (2, 3, 4),
first of all the number of menus is input,
wherein a plurality of values of the first and third variables can be
• retrieved from at least one memory device,
• displayed on at least one display device (6, 7, 8, 9) and
• modified via at least one operating device (6, 7, 8, 9), and
at least one value of the first and third variables being proposed after selection of a menu from a plurality of menus for confirmation or modification on at least one display device (6, 7, 8, 9),
• the input working sequence being then started automatically, and
• after completion of the input working sequence at least the characteristic first variable, determined by the number of first and/or second items to be cooked, being automatically adapted for future working sequences to identified surplus quantities of first items to be cooked and/or identified shortages of second items to be cooked, in that at the end of the sequence plan surplus and/or insufficient quantities of items to be cooked are identified and input, in order to determine therefrom and take into account in future a modification in quantity, such that self-learning and thus continuous improvement takes place.

2. The method according to claim 1, **characterized in that** the functional device is selected from a heating device, a moisture supply device, a moisture removal device, a fluid supply device, a fluid removal device, a pressure application device, a pressure reduction device, a cooking chamber atmosphere circulation device, an accessory device, in particular in the form of a carrier device for items to be cooked, and/or a cleaning device.

3. The method according to claim 1 or 2, **characterized in that** the characteristic first variable and/or at least one second variable characteristic of a plurality of selected items to be cooked is also determined by
• at least one cooking process for an item to be cooked,
• a degree of cooking of an item to be cooked,
• at least one period of time of a cooking process and/or working sequence,
• at least one point in time, preferably in the form of a start and/or end point of a cooking process and/or working sequence,
• at least one price, in particular in the form of a purchase price of an item to be cooked and/or production price of a menu,
• a resource consumption by a cooking process, in particular in the form of a consumption of energy, water, time and/or space in the cooking chamber,
• a shelf life of an item to be cooked,
• an availability,
• a weight loss,
• a soiling generation,
• a smoke generation and/or
• an odor generation by a cooking process.

4. The method according to claim 3, **characterized in that** a plurality of values of the second variable can be retrieved from at least one memory device, displayed on at least one display device (6, 7, 8, 9) and/or modified via at least one operating device (6, 7, 8, 9).

5. The method according to any one of the preceding claims, **characterized in that** a modification in values of the first, second and/or third variable can be stored.

6. The method according to any one of the preceding claims, **characterized in that** at least one value of the first and/or third variable after selection of a menu from a plurality of menus and
• of items to be cooked from a plurality of items to be cooked, preferably including a number of menus and/or items to be cooked, and/or
• a cooking device from a plurality of cooking devices (2, 3, 4) and/or
• at least one optimization parameter, in particular determined by at least one point in time, a period of time, at least one resource consumption, costs, a soiling, a smoke generation and/or an odor generation
is/are automatically selected or proposed for confirmation or modification, preferably by displaying on at least one display device (6, 7, 8, 9).

7. The method according to any one of the preceding claims 3 to 6, **characterized in that** at least one value of the second variable after selection
• of items to be cooked from a plurality of items to be cooked, preferably including a number of items to be cooked, and/or
• a cooking device from a plurality of cooking devices (2, 3, 4) and/or
• at least one optimization parameter, in particular determined by at least one point in time, a period of time, at least one resource consumption, costs, a soiling, a smoke generation and/or an odor generation
is automatically selected or proposed for confirmation or modification, preferably by displaying on at least one display device (6, 7, 8, 9).

8. The method according to any one of the preceding claims, **characterized in that** an automatic reordering of items to be cooked can take place via a merchandise management system, preferably after selection of a menu and/or a plurality of items to be cooked, and/or
a price calculation can take place automatically via a controlling system, in particular in order to display a price for at least one menu on a display device, preferably after selection of a menu and/or a plurality of items to be cooked.

9. A cooking device (2, 3, 4), configured for carrying out a method according to any one of the preceding claims, with at least one functional device, one display device (6, 7, 8), one operating device (6, 7, 8) and one memory device, wherein the display device and the operating device preferably comprise at least one common touchscreen.

10. A system (1) consisting of cooking devices (2, 3, 4) according to claim 9, a network (5) and display and input devices (6, 7, 8, 9), for carrying out a method according to any one of claims 1 to 8, wherein preferably the cooking devices (2, 3, 4) are connected to one another and to at least one merchandise management system and/or one controlling system, preferably wirelessly and/or via an intranet or the internet.

11. The system (1) according to claim 10, **characterized in that** a display and operating device (9) of the display and input devices (6, 7, 8, 9) is provided separately from the cooking devices (2, 3, 4), preferably comprising a touchscreen and/or handheld.

## Revendications

1. Procédé pour déterminer un futur déroulement de travail avec un plan de déroulement dans au moins un appareil de cuisson (2, 3, 4), dans lequel
• au moins un menu, qui comprend au moins deux produits à cuire, est sélectionné,
• en tenant compte de
• au moins une première grandeur caractéristique de l'au moins un menu sélectionné et
• au moins une troisième grandeur caractéristique d'un appareil de cuisson (2, 3, 4), qui est déterminée par au moins un dispositif fonctionnel de l'appareil de cuisson (2, 3, 4) et/ou par le dimensionnement d'un espace de cuisson de l'appareil de cuisson (2, 3, 4) et/ou au moins une zone de chargement dans l'espace de cuisson de l'appareil de cuisson (2, 3, 4),
le nombre de menus est entré d'abord,
dans lequel une pluralité de valeurs des première et troisième grandeurs peuvent être
• récupérées à partir d'au moins un dispositif de mémoire,
• affichées sur au moins un dispositif d'affichage (6, 7, 8, 9) et
• modifiées par au moins un dispositif de commande (6, 7, 8, 9), et
au moins une valeur des première et troisième grandeurs étant proposée après sélection d'un menu parmi une pluralité de menus pour confirmation ou modification sur au moins un dispositif d'affichage (6, 7, 8, 9)
• le déroulement de travail entré étant lancé automatiquement ensuite, et
• après l'achèvement du déroulement de travail entré, au moins la première grandeur caractéristique, déterminée par le nombre de premiers et/ou deuxièmes produits à cuire, étant automatiquement adaptée pour des futurs déroulements de travail aux quantités excédentaires identifiées des premiers produits à cuire et/ou des quantités manquantes identifiées des deuxièmes produits à cuire, par le fait que des quantités excédentaires et/ou insuffisantes de produits à cuire sont identifiées et entrées à la fin du plan de déroulement, afin, à partir de cette étape, de déterminer et de prendre en compte à l'avenir une modification d'une quantité, de sorte qu'un auto-apprentissage et, par conséquent, une amélioration continue a lieu.

2. Procédé selon la revendication 1, **caractérisé en ce que**
le dispositif fonctionnel est sélectionné parmi un dispositif de chauffage, un dispositif d'apport d'humidité, un dispositif d'évacuation d'humidité, un dispositif d'apport de liquide, un dispositif d'évacuation de liquide, un dispositif d'application de pression, un dispositif de diminution de pression, un dispositif de circulation d'atmosphère d'espace de cuisson, un dispositif accessoire, en particulier sous la forme d'un dispositif de support des produits à cuire, et/ou un dispositif de nettoyage.

3. Procédé selon la revendication 1 ou 2, **caractérisé en ce qu'**
la première grandeur caractéristique et/ou au moins une deuxième grandeur caractéristique d'une pluralité de produits à cuire sélectionnés sont également déterminées par
• au moins un processus de cuisson pour un produit à cuire,
• un degré de cuisson d'un produit à cuire,
• au moins une durée d'un processus de cuisson et/ou d'un déroulement de travail,
• au moins un moment, de préférence sous la forme d'une heure de début et/ou de fin d'un processus de cuisson et/ou d'un déroulement de travail,
• au moins un prix, en particulier sous la forme d'un prix d'achat d'un produit à cuire et/ou d'un prix de production d'un menu,
• une consommation de ressources par un processus de cuisson, en particulier sous la forme d'une consommation d'énergie, d'eau, de temps et/ou d'espace dans l'espace de cuisson,
• une durée de conservation d'un produit à cuire,
• une disponibilité,
• une perte de poids,
• une génération de saleté,
• une génération de fumée et/ou
• une génération d'odeurs par un processus de cuisson.

4. Procédé selon la revendication 3, **caractérisé en ce qu'**
une pluralité de valeurs de la deuxième grandeur peuvent être récupérées à partir d'au moins un dispositif de mémoire, affichées sur au moins un dispositif d'affichage (6, 7, 8, 9) et/ou modifiées par au moins un dispositif de commande (6, 7, 8, 9).

5. Procédé selon l'une quelconque des revendications précédentes, **caractérisé en ce qu'** une modification des valeurs des première, deuxième et/ou troisième grandeurs peut être mémorisée.

6. Procédé selon l'une quelconque des revendications précédentes, **caractérisé en ce qu'** au moins une valeur de la première et/ou troisième grandeur après sélection d'un menu parmi une pluralité de menus et
• de produits à cuire parmi une pluralité de produits à cuire, de préférence incluant un certain nombre de menus et/ou de produits à cuire, et/ou
• d'un appareil de cuisson parmi une pluralité d'appareils de cuisson (2, 3, 4) et/ou
• d'au moins un paramètre d'optimisation, en particulier déterminé par au moins un moment, une durée, au moins une consommation de ressources, des coûts, un encrassement, une génération de fumée et/ou une génération d'odeur,
est ou sont automatiquement sélectionnée(s) ou proposée(s) pour confirmation ou modification, de préférence par l'affichage sur au moins un dispositif d'affichage (6, 7, 8, 9).

7. Procédé selon l'une quelconque des revendications précédentes 3 à 6, **caractérisé en ce qu'** au moins une valeur de la deuxième grandeur après sélection
• de produits à cuire parmi une pluralité de produits à cuire, de préférence incluant un certain nombre de produits à cuire, et/ou
• d'un appareil de cuisson parmi une pluralité d'appareils de cuisson (2, 3, 4) et/ou
• d'au moins un paramètre d'optimisation, en particulier déterminé par au moins un moment, une durée, au moins une consommation de ressources, des coûts, un encrassement, une génération de fumée et/ou une génération d'odeur,
est ou sont automatiquement sélectionnée(s) ou proposée(s) pour confirmation ou modification, de préférence par l'affichage sur au moins un dispositif d'affichage (6, 7, 8, 9).

8. Procédé selon l'une quelconque des revendications précédentes, **caractérisé en ce qu'**
un réapprovisionnement automatique des produits à cuire peut avoir lieu par un système de gestion des marchandises, de préférence après sélection d'un menu et/ou d'une pluralité de produits à cuire, et/ou
un calcul de prix peut avoir lieu automatiquement par un système de contrôle, en particulier pour afficher un prix pour au moins un menu sur un dispositif d'affichage, de préférence après sélection d'un menu et/ou d'une pluralité de produits à cuire.

9. Appareil de cuisson (2, 3, 4), conçu pour la mise en oeuvre d'un procédé selon l'une quelconque des revendications précédentes, avec au moins un dispositif fonctionnel, un dispositif d'affichage (6, 7, 8), un dispositif de commande (6, 7, 8) et un dispositif de mémoire, dans lequel le dispositif d'affichage et le dispositif de commande comprennent de préférence au moins un écran tactile commun.

10. Système (1) constitué d'appareils de cuisson (2, 3, 4) selon la revendication 9, d'un réseau (5) et de dispositifs d'affichage et d'entrée (6, 7, 8, 9) pour la mise en oeuvre d'un procédé selon l'une quelconque des revendications 1 à 8, dans lequel de préférence les appareils de cuisson (2, 3, 4) sont reliés entre eux et avec au moins un système de gestion des marchandises et/ou un système de contrôle, de préférence sans fil et/ou par un intranet ou Internet.

11. Système (1) selon la revendication 10, **caractérisé en ce qu'**
un dispositif d'affichage et de commande (9) des dispositifs d'affichage et d'entrée (6, 7, 8, 9) est prévu séparément des appareils de cuisson (2, 3, 4), de préférence comprenant un écran tactile et/ou pouvant être tenu à la main.
